# EUROPEAN PATENT APPLICATION

(11) **EP 2 908 234 A1**
(43) Date of publication of application: **19.08.2015**
(21) Application number: 13845396.4
(22) Date of filing: 08.10.2013
(51) Int. Cl.: G06F 3/048, G06F 3/041, G06F 3/0481, G06F 3/0488

(54) **USER INTERFACE DEVICE, USER INTERFACE METHOD AND PROGRAM**

(30) Priority: 10.10.2012 JP 2012225207
(71) Applicant: NTT DOCOMO, INC., Chiyoda-ku Tokyo 100-6150 (JP)
(72) Inventor: MORINAGA, Yasuo, Tokyo 100-6150 (JP); TAGAYA, Masashi, Tokyo 100-6150 (JP); TSUKAMOTO, Masakatsu, Tokyo 100- 6150 (JP); AOYAGI, Sadanori, Tokyo 100-6150 (JP)
(74) Representative: Hoffmann Eitle
(86) International application number: PCT/JP2013/077329
(87) International publication number: WO 2014/057929

(57) **Abstract**

To suppress the occurrence of operation error with respect to a user operation for indicating an object on a display surface without relying on changing the display of the object.

Display device 10 displays an image on display surface 141, and can also detect a proximity operation in which finger F is brought close to display surface 141 without making contact and a contact operation in which the finger makes contact with display surface 141. Display device 10 displays on display surface 141 email composing screen SC1 that includes selectable objects. When a proximity operation that indicates object b1 is detected, display device 10 sets a selection of object b1 to valid and sets a selection of surrounding objects b2 to b5 (objects represented by diagonal hatching in Fig. 6B) to invalid. When detecting a contact operation that indicates object b1 for which selection is set to valid, display device 10 specifies object b 1 as a selected object by a user. Display device 10 does not specify objects for which selection is set to valid, as selected objects.

## Description

### Technical Field

The present invention relates to an operation for selecting an object on a user interface.

### Background Art

Some display devices, such as smartphones or tablet terminals, include a user interface that displays a selectable object (for example, an operation item such as an icon image), and allow the use of a function corresponding to a selected object that is selected by a user. Patent Documents 1 and 2 disclose a technique for preventing occurrence of operation error when a user selects an object on this kind of user interface. Patent Document 1 discloses that when the approach of a finger to a touch panel is detected, a key disposed near a detected position is enlarged and displayed. Patent Document 2 discloses that a part to be displayed, which is to be enlarged and displayed, is registered in advance, and when the approach of a finger to the registered part is detected, the part is enlarged and displayed.

### Citation List

### Patent Document

Patent Document 1: JP2006-59238A
Patent Document 2: JP2009-3867A

### Summary of Invention

### Technical Problem

Since inventions described in patent documents 1 and 2 enlarge and display an object to improve operability for a user, it is unavoidable that the display of the object is changed.

In view of the problems in the prior art, it is an object of the present invention to suppress the occurrence of operation error with respect to a user operation for indicating an object on a display surface without relying on changing the display of the object.

### Solution to Problem

To solve the above problem, a user interface device of the present invention includes: a display unit that displays an image on a display surface; an operation detecting unit that detects a first operation in which a pointer is brought close to the display surface without making contact with the display surface, and a second operation in which the pointer is brought closer to the display surface than in the first operation; a display control unit that performs a control to display an image including a plurality of selectable objects on the display surface; a setting unit that sets a selection of an object indicated by the first operation to valid, the first operation being detected by the operation detecting unit, and sets a selection of another object displayed on the display surface to invalid; and a first specifying unit that specifies the object as a selected object by a user upon the second operation being detected by the operation detecting unit, the second operation indicating, from among the plurality of objects displayed on the display surface, the object for which selection is set to valid by the setting unit.

In the present invention, a second specifying unit that specifies a positional relation between the object indicated by the first operation and the other object may be included, and the setting unit may set the selection of the other object having a positional relation to invalid, the positional relation being specified by the second specifying unit and satisfying a specific condition.

In this invention, the display control unit may use, as the specific condition, a condition in which the other object is disposed within a predetermined range from a position of the object indicated by the first operation.

Also, in the present invention, the setting unit may set, when a plurality of objects are indicated by the first operation, a selection of any one of the plurality of objects to valid, and may set a selection of another object to invalid.

In this invention, the setting unit may set a selection of an object to valid, the object having a greatest area overlapping with the pointer among the plurality of objects indicated by the first operation.

In the present invention, the setting unit may set a selection of the other object to invalid when a size of the object indicated by the first operation is smaller than a threshold.

In the present invention, the display control unit may vary a display appearance of the object for which selection is set to valid, or of the other object for which selection is set to invalid, according to a setting of the setting unit.

A user interface method of the present invention includes: an operation detecting step of detecting a first operation in which a pointer is brought close to a display surface, on which an image is displayed, without making contact with the display surface, and a second operation in which the pointer is brought closer to the display surface than in the first operation; a display control step of performing a control to display an image including a plurality of selectable objects on the display surface; a setting step of setting a selection of an object indicated by the first operation to valid, the first operation being detected in the operation detecting step, and sets a selection of another object displayed on the display surface to invalid; and a first specifying step of specifying the object as a selected object by a user upon the second operation being detected by the operation detecting unit, the second operation indicating, from among the plurality of objects displayed on the display surface, the object for which selection is set to valid in the setting step.

A program of the present invention is a program for causing a computer of a display device that displays an image on a display surface, to execute: an operation detecting step of detecting a first operation in which a pointer is brought close to a display surface, on which an image is displayed, without making contact with the display surface, and a second operation in which the pointer is brought closer to the display surface than in the first operation; a display control step of performing a control to display an image including a plurality of selectable objects on the display surface; a setting step of setting a selection of an object indicated by the first operation to valid, the first operation being detected in the operation detecting step, and sets a selection of another object displayed on the display surface to invalid; and a first specifying step of specifying the object as a selected object by a user upon the second operation being detected by the operation detecting unit, the second operation indicating, from among the plurality of objects displayed on the display surface, the object for which selection is set to valid in the setting step.

### Effects of Invention

According to the present invention, it is possible to suppress the occurrence of operation error with respect to a user operation for indicating an object on a display surface without relying on changing the display of the object.

### Brief Description of the Drawings

Fig. 1 is a block diagram showing a hardware configuration of a display device.
Fig. 2A is a diagram explaining operations that are able to be specified using a proximity sensor and a contact sensor.
Fig. 2B is a diagram explaining operations that are able to be specified using a proximity sensor and a contact sensor.
Fig. 3A is a diagram explaining a screen with objects displayed.
Fig. 3B is a diagram explaining a screen with objects displayed.
Fig. 4 is a function block diagram showing a functional configuration of a control unit of a display device (the first embodiment).
Fig. 5 is a flowchart showing a procedure for a processing of a display device (the first embodiment).
Fig. 6A is a diagram explaining a screen with objects displayed (the first embodiment).
Fig. 6B is a diagram explaining a screen with objects displayed (the first embodiment).
Fig. 7 is a diagram explaining a screen with objects displayed (the first embodiment).
Fig. 8A is a diagram explaining a screen with objects displayed (the first embodiment).
Fig. 8B is a diagram explaining a screen with objects displayed (the first embodiment).
Fig. 9A is a diagram explaining a screen with objects displayed (the first embodiment).
Fig. 9B is a diagram explaining a screen with objects displayed (the first embodiment).
Fig. 10 is a function block diagram showing a functional configuration of a control unit of a display device (the second embodiment).
Fig. 11 is a flowchart showing a procedure for a processing of a display device (the second embodiment).
Fig. 12 is a diagram explaining a screen with objects displayed (the second embodiment).
Fig. 13A is a diagram showing a contact operation for selecting an object.
Fig. 13B is a diagram showing a contact operation for selecting an object.
Fig. 14 is a flowchart showing a procedure for a processing of a display device (the third embodiment).
Fig. 15A is a diagram explaining a screen with objects displayed (the third embodiment).
Fig. 15B is a diagram explaining a screen with objects displayed (the third embodiment).

### Description of Embodiments

Embodiments of the present invention will be described below with reference to the drawings.

### First Embodiment

Below is a description of the first embodiment of the present invention.

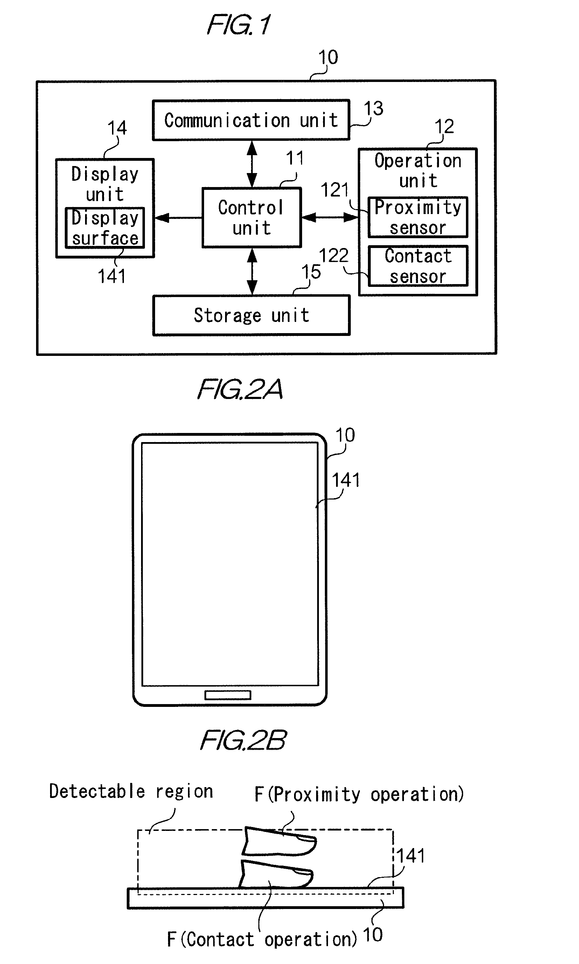

Fig. 1 is a block diagram showing a hardware configuration of display device 10. As shown in Fig. 1, display device 10 includes control unit 11, operation unit 12, communication unit 13, display unit 14, and storage unit 15.

Control unit 11 includes a microcomputer that includes a CPU (Central Processing Unit), a ROM (Read Only Memory), and a RAM (Random Access Memory). The CPU controls various components of display device 10 by loading into the RAM a program stored in the ROM or storage unit 15 and executing the program. Communication unit 13 includes a wireless communication circuit and an antenna. Communication unit 13 is an interface connected to a network to perform communications. Display device 14 includes a rectangle display surface 141, such as a liquid crystal panel, in which a plurality of pixels is arranged. Display device 14 displays an image on display surface 141. Storage unit 15 includes a storage device such as an EEPROM (Electronically Erasable and Programmable ROM) or a flash memory. Storage unit 15 stores a program executed by control unit 11.

Operation unit 12 includes proximity sensor 121 and contact sensor 122. Operation unit 12 is an operation device operated by a user. Proximity sensor 121 is a sensor for detecting a state in which a finger (a fingertip) of a user comes into close proximity of display surface 141 without making contact. Proximity sensor 121 is, for example, an electrostatic capacitance sensor that detects a position of the finger of the user based on the variation of electrostatic capacity. However, for example, an ultrasonic sensor that uses ultrasonic waves, an infrared light sensor, a high-frequency oscillation sensor that utilizes electromagnetic induction, or a magnetic sensor that uses a magnet may be used as proximity sensor 121. Any detection method may be employed in this sensor. Contact sensor 122 is a sensor for detecting a state in which a finger of a user makes contact with display surface 141. Contact sensor 122 is, for example, an electrostatic capacitance sensor. However, for example, a resistive sensor or an infrared light sensor may be used as contact sensor 122. Any detection method may be employed in this sensor.

When detecting a position indicated by the finger of the user, proximity sensor 121 and contact sensor 122 provide control unit 11 with position information representing the detected position. Operations that are able to be specified using the position information provided by proximity sensor 121 and contact sensor 122 will be described below.

Figs. 2A and 2B are diagrams explaining operations that are able to be specified using position information provided by proximity sensor 121 and contact sensor 122. Fig. 2A is a diagram showing a front view of display device 10. Fig. 2B is a diagram showing a side view of display device 10.

In the present embodiment, position information representing a position detected by proximity sensor 121 and contact sensor 122 is represented by coordinate information that represents a position in an up-down direction on display surface 141, a position in a right-left direction on display surface 141, and a position in a normal direction of display surface 141, as viewed from the front of display device 10 as shown in Fig. 2A.

Proximity sensor 121 detects a position of finger F of the user within a detectable region, using a spatial region located in the normal direction of display surface 141, such as a range that is represented by a long dashed, double-short dashed line and is labeled as "detectable region" in Fig. 2B, as the detectable region. Proximity sensor 121 provides position information representing the detected position. In the following description, an operation specified by position information provided by proximity sensor 121 is referred to as a "proximity operation" (a first operation). Contact sensor 122 detects a position where finger F of the user makes contact with display surface 141, and provides position information representing the detected position. In the following description, an operation specified by position information provided by contact sensor 122 is referred to as a "contact operation" (a second operation). The contact operation corresponds to an operation in which finger F of the user is brought closer to display surface 141 than in the proximity operation.

It is to be noted that a pointer whose position is detected by proximity sensor 121 and contact sensor 122 is not limited to the finger of a user, and the pointer may be a tool, such as a stylus pen that is held by hand and moved by the user to indicate a position on a display surface. Operation unit 12 may include another operation element such as a physical key as an object operated by a user.

Display device 10 that includes the above components provides a user interface called GUI (Graphical User Interface) using the operation unit 12 and display unit 14 described above. In this embodiment, display device 10 is a smartphone, and includes, in addition to the components shown in Fig. 1, components in common with a general smartphone, such as a microphone and a speaker for inputting and outputting sound, and a camera for photography. Display device 10, however, may be a display device other than a smartphone. Display device 10 may be another display device for providing a user interface, such as a tablet computer, a mobile telephone, a portable game console, a portable music player, a personal computer, or a PDA (Personal Digital Assistant).

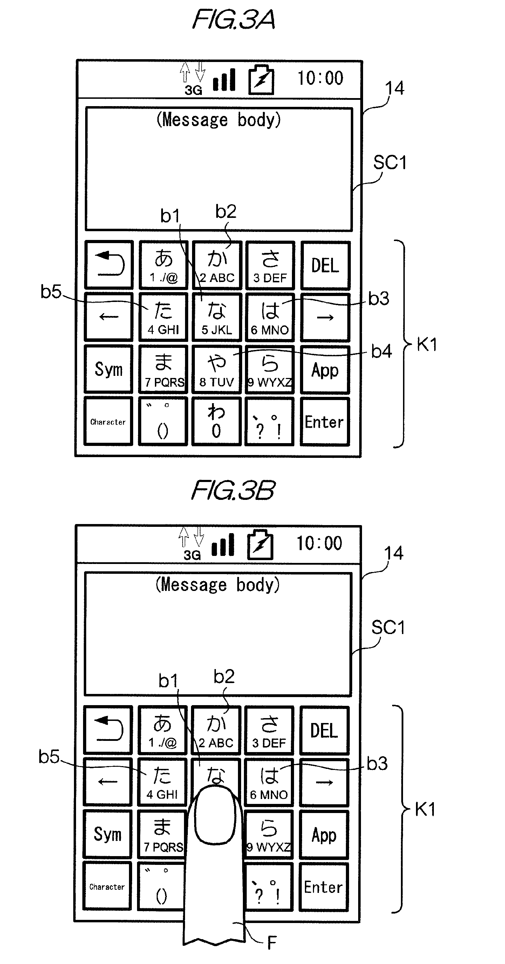

Figs. 3A and 3B are diagrams explaining a screen displayed by display device 10. Fig. 3A is a diagram showing an email composing screen SC1 displayed on display unit 14 while an email is composed. Email composing screen SC1 includes, in addition to a region (a rectangular region labeled as "message body") in which an email in the process of being composed is displayed, operation region K1 in which objects operated by the user are arranged. Operation region K1 is, for example, a region in which a software keyboard representing a 10-key numeric keypad is displayed (a numeric keypad), and includes objects corresponding to the keys in the keypad.

As shown in Fig. 3A, on email composing screen SC1, object b1 used for inputting Japanese characters belonging to " 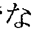 (na)" column is disposed near the center of email composing screen SC1, and other objects are disposed so as to surround object b1. For example, object b2 used for inputting Japanese characters belonging to " 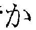 (ka)" column is disposed above object b1. Object b3 used for inputting Japanese characters belonging to " 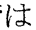 (ha)" column is disposed to the right of object b1. Object b4 used for inputting Japanese characters belonging to " 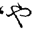 (ya)" column is disposed below object bl. Object b5 used for inputting Japanese characters belonging to " 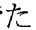 (ta)" column is disposed to the left of object b1.

When a user performs an operation on email composing screen SC1 to input a Japanese character belonging to " 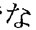 (na)" column, the user performs a proximity operation indicating object b1 by bringing finger F close to object b1 as shown in Fig. 3B. The user then continues to bring finger F closer to display surface 141, and performs a contact operation indicating object b1. When the contact operation is performed, finger F may extend its area of contact to include other objects surrounding object b1 (in this example, objects b2 to b5) to make contact with, and as a result an object unintended by the user may be indicated by the contact operation. For that reason, there is a possibility of operation error occurring in which an object unintended by a user is indicated. To address this problem, display device 10 includes a user interface for supporting a contact operation of the user to allow the user to select an intended object accurately.

As described above, objects displayed on display surface 141 are objects that are able to be selected by the user performing a contact operation for indicating objects on a display surface. When an object is selected by the contact operation of the user, display device 10 specifies the object as a selected object, and executes a processing corresponding to the selected object. Objects of the present embodiment are, for example, software buttons. The objects, however, may be objects disposed on a desktop screen, such as icon images corresponding to application programs or character strings to which hyperlinks are set. As described above, objects of the present embodiment need only to be such objects as those that are able to be selected by a user and when a particular object from among the displayed objects is selected by the user, a specific processing corresponding to the selected object is performed by display device 10.

A functional configuration related to a user interface of display device 10 will be described next.

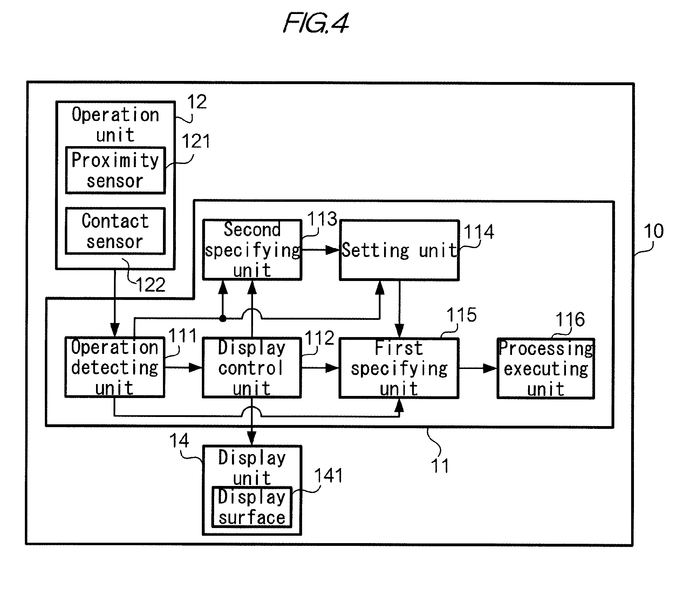

Fig. 4 is a function block diagram showing a functional configuration of control unit 11 of display device 10. As shown in Fig. 4, control unit 11 of display device 10 implements functions corresponding to operation detecting unit 111, display control unit 112, second specifying unit 113, setting unit 114, first specifying unit 115, and processing executing unit 116.

Operation detecting unit 111 detects a proximity operation and a contact operation that are performed on display surface 141 by the user. Operation detecting unit 111 detects the proximity operation of the user based on position information provided by proximity sensor 121. Operation detecting unit 111 detects the contact operation of the user based on position information provided by contact sensor 122.

For example, when position information, in a display area, of an object displayed on display surface 141 matches position information representing a position, in a horizontal direction of display surface 141, of a finger of the user, operation detecting unit 111 detects a proximity operation or a contact operation specified by the position information as an operation indicating the object. Alternatively, even if position information, in a display area, of an object displayed on display surface 141 does not match position information representing a position, in the horizontal direction of display surface 141, of a finger of the user, when these pieces of information match each other in a predetermined range (for example, the finger makes contact with an area near the object), operation detecting unit 111 may detect a proximity operation or a contact operation as an operation indicating the object. In this case, operation detecting unit 111 may extend a range for detecting the proximity operation that indicates the object to a larger region compared with that of the contact operation.

Display control unit 112 controls display unit 14 to display an image including selectable objects on display surface 141.

Second specifying unit 113 specifies a positional relation between an object indicated by a proximity operation and another object displayed on display surface 141. For example, second specifying unit 113 specifies another object located within a predetermined range from a position of the object indicated by the proximity operation.

Setting unit 114 performs settings for making the selection of objects either valid or invalid with regard to objects displayed on display surface 141. Although the setting function is described below in greater detail, an object for which selection is set to valid is an object to be specified as a selected object when a user indicates the object by a contact operation. An object for which selection is set to invalid is an object not to be specified as a selected object even if the user indicates the object by a contact operation. Specifically, setting unit 114 sets to valid, the selection of an object indicated by the proximity operation that is detected by the operation detecting unit 111, and sets the selection of another object displayed on display surface 141 to invalid. In this embodiment, setting unit 114 sets to invalid, the selection of an object having a positional relation that is specified by second specifying unit 113 and which satisfies a specific condition. In this case, setting unit 114 sets to invalid, the selection of an object located within the predetermined range of the object indicated by the proximity operation.

When a contact operation that indicates, from among objects displayed on display surface 141, the object for which selection is set to valid by setting unit 114, is detected by operation detecting unit 111, first specifying unit 115 specifies this object as an object selected by a user. First specifying unit 115 provides processing executing unit 116 with information representing the selected object. On the other hand, even if a contact operation that indicates the object for which selection is set to invalid by setting unit 114, is detected by first specifying unit 115, first specifying unit 115 does not specify this object as a selected object.

Processing executing unit 116 executes a processing according to the selected object specified by first specifying unit 115. For example, processing executing unit 116 executes a specific processing to allow a user to use a function corresponding to the selected object. Accordingly, processing executing unit 116 executes a corresponding specific processing regarding an object for which selection is set to valid when the object is specified as the selected object. On the other hand, processing executing unit 116 does not execute a corresponding specific processing regarding an object for which selection is set to invalid since the object is not specified as a selected object.

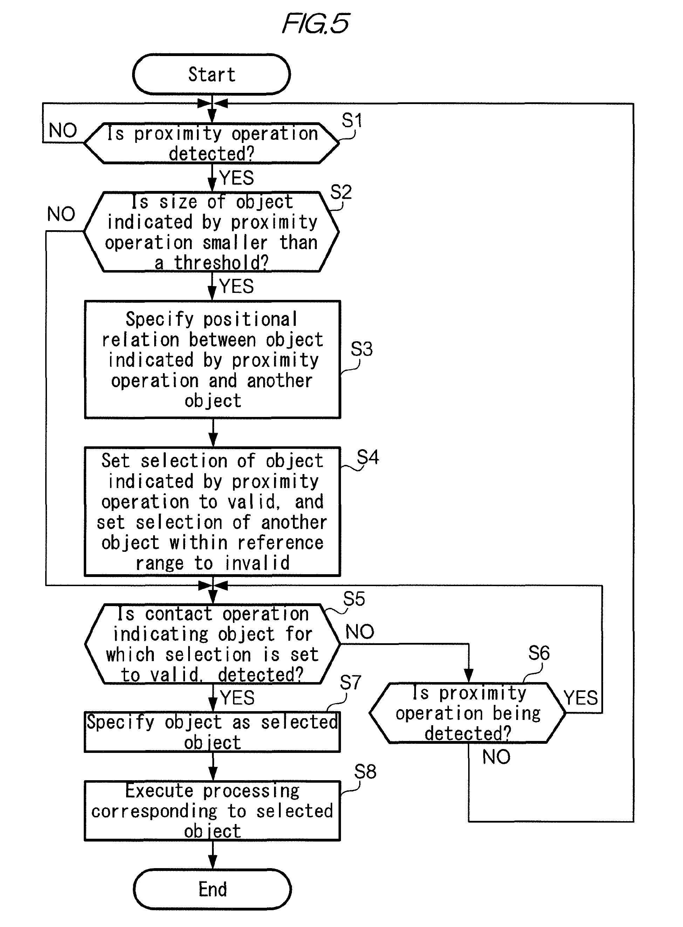

Fig. 5 is a flowchart showing a procedure for a processing performed when display device 10 provides a user interface. Display device 10 repeatedly executes the following processing steps while an image including objects is displayed on display surface 141. An operation of display device 10 will be described below with reference to an exemplary operation in a case where display device 10 displays email composing screen SC1 shown in Fig. 3A.

Control unit 11 of display device 10 determines whether a proximity operation is detected based on position information provided by proximity sensor 121 (step S1). In this step, control unit 11 waits until position information representing a position within the detectable region is provided by proximity sensor 121 (step S1; No). When the position information within the detectable region is provided by proximity sensor 121, control unit 11 determines that the proximity operation is detected (step S1; YES).

For example, as shown in Fig. 3B, control unit 11 detects a proximity operation that is performed by finger F indicating object b1. In this step, if a proximity operation indicating a plurality of objects is detected (namely, if the finger of the user extends across the display area containing the plurality of objects to make contact with the plurality of objects), control unit 11 may regard an object having the greatest area overlapping with finger F as an object that the user is going to operate, and may detect the object as an object indicated by the proximity operation. Control unit 11 however may detect, for example, an object located at the farthest left end or an object located at the farthest upper end as an object indicated by the proximity operation from among the plurality of objects indicated by the proximity operation. In this manner, control unit 11 may detect any one object as an object indicated by a proximity operation based on a predetermined condition.

Control unit 11 then determines whether a size of the object indicated by the proximity operation is smaller than a threshold (step S2). Control unit 11 acquires size SZ (in this case, an area) of the object indicated by the proximity operation, and compares the acquired size SZ with threshold Th. If size SZ and threshold Th satisfy the relation SZ < Th, control unit 11 determines "YES" in the processing of step S2. Meanwhile, if size SZ and threshold Th satisfy a relation SZ ≥ Th, control unit 11 determines "NO" in the processing of step S2, and proceeds to the processing of step S5.

When the proximity operation indicating object b1 has been detected, control unit 11 determines that size SZ of the object is smaller than threshold Th (step S2; YES), and proceeds to the processing of step S3.

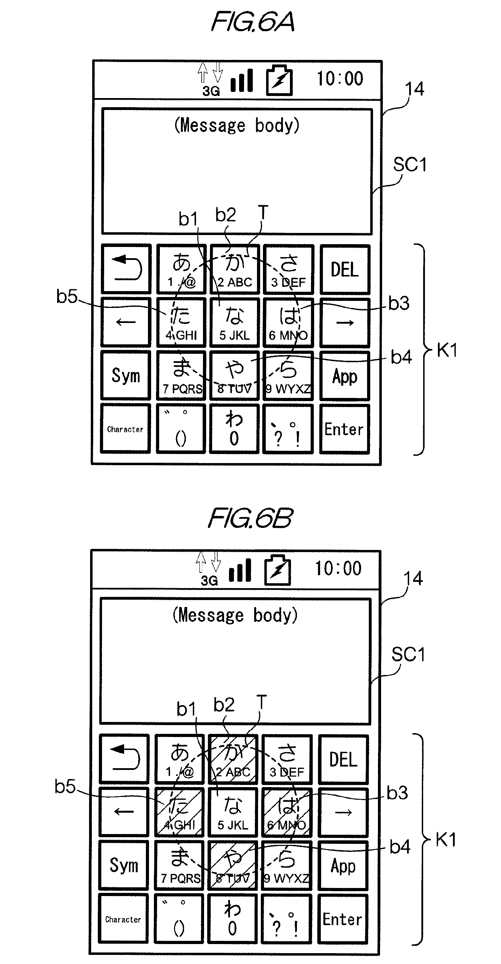

Control unit 11 then specifies a positional relation between the object indicated by the proximity operation and another object (step S3). In this step, as shown in Fig. 6A, control unit 11 firstly determines circular reference range T with reference to a position of the object (in this case, object b1) indicated by the proximity operation. Control unit 11 then specifies another object included in reference range T. As shown in Fig. 6A, in this case, control unit 11 specifies objects b2 to b5 each having a center of gravity included in reference range T.

Reference range T has a range determined at a design stage or the like to determine whether another object is disposed near the object indicated by the proximity operation. According to the processing of step S3, it is possible that control unit 11 specifies a positional relation that provides indication of a proximity level between the object indicated by the proximity operation and another object.

Control unit 11 then performs settings on the selection of objects such that the selection of the object indicated by the proximity operation is set to valid, and the selection of another object within reference region T is set to invalid (step S4). As shown in Fig. 6B, in this case, since the proximity operation indicating object b1 has been detected, control unit 11 sets the selection of object b1 to valid. On the other hand, control unit 11 sets the selection of objects b2 to b5, which are other objects within reference range T, to invalid. In Fig. 6B and other drawings, objects with diagonal hatching mean objects for which selection is set to invalid.

It is to be noted that control unit 11 leaves the selection of another object out of reference range T valid.

Control unit 11 then determines whether a contact operation indicating the object for which selection is set to valid, is detected (step S5). If no contact operation indicating the object is detected after the proximity operation is detected, control unit 11 determines "NO" in the processing of step S5. Control unit 11 then determines whether the proximity operation is being detected (step S6). If it is determined that the proximity operation is being detected (step S6; YES), control unit 11 returns to the processing of step S5 while maintaining the settings of validity or invalidity on the selection of objects. Meanwhile, if it is determined that the proximity operation is no longer detected (step S6; NO), control unit 11 returns to the processing of step S1. When returning to the processing of step S1, control unit 11 cancels the settings of validity or invalidity on the selection of objects, and sets the selection of all objects to valid. In this manner, when the proximity operation indicating the object is no longer detected, control unit 11 returns the settings to a state in which the selection of all objects, including an object for which selection is set to invalid, is set to valid.

In the processing of step S5, if it is determined that the contact operation indicating the object for which selection is set to valid, is detected (step S5; YES), control unit 11 specifies the object as a selected object (step S7). When object b1 is indicated by the contact operation, control unit 11 specifies object b1 as the selected object. In this step, if any one of objects b2 to b5 is indicated by the contact operation, control unit 11 does not specify the object as a selected object.

Control unit 11 executes a processing corresponding to the selected object (step S8). In this case, control unit 11 executes the input of a Japanese character belonging to " 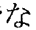 (na)" column as a processing corresponding to object b1. In this step, control unit 11 cancels the settings of validity or invalidity on the selection of objects if the proximity operation indicating the object is no longer detected at a time when the selected object is specified in the processing of step S7, or a time when the processing corresponding to the selected object is executed in the processing of step S8.

It is to be noted that the processing corresponding to the selected object executed by control unit 11 in the processing of step S8 may be any kind of processing. For example, when an object to which a hyperlink is set using a URL (Uniform Resource Locator) is selected, control unit 11 displays a web page corresponding to the URL on display surface 141. When an object that is used for instructing to transmit input data of the user is selected by the contact operation, control unit 11 transmits the data by communication unit 13.

As shown in Fig. 3B, if finger F overlaps any one of objects b2 to b5, which is other than object b1, during a proximity operation, there is a possibility that display device 10 detects a contact operation indicating any one of objects b2 to b5. In this case, an object unintended by a user is selected, and as a result operation error occurs. To address this problem, display device 10 determines a single object indicated by a proximity object to an object that has a possibility of being indicated by a contact operation, and sets in advance the selection of another object surrounding the object to invalid. This prevents control unit 11 from detecting a contact operation indicating an unintended object, and from specifying this object as a selected object even if the user brings finger F close to display surface 141 and finger F makes contact with the unintended object.

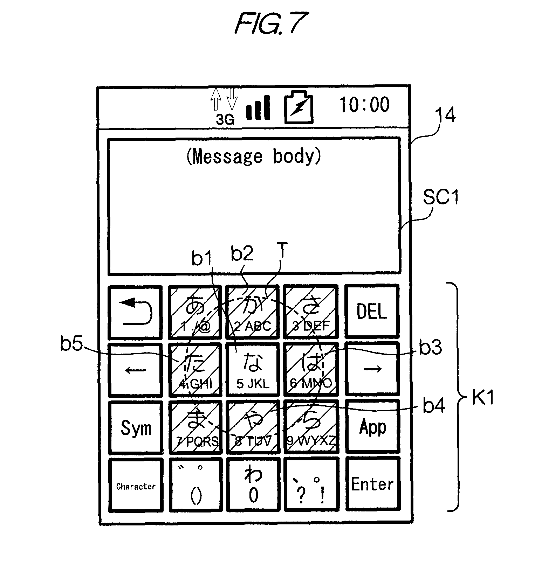

Although in the above description display device 10 sets the selection of objects, each having a center of gravity included in reference range T, to invalid, display device 10 may set the selection of objects that are, at least in part, included in reference range T to invalid. In this case, as shown in Fig. 7, control unit 11 sets to invalid, the selection of an object used for inputting Japanese characters belonging to " 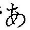 (a)" column, an object used for inputting Japanese characters belonging to " 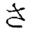 (sa)" column, an object used for inputting Japanese characters belonging to " 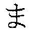 (ma)" column, and an object used for inputting Japanese characters belonging to " 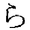 (ra)" column to invalid, in addition to setting the selection of objects b2 to b5 to invalid.

Hereafter, control unit 11 executes the processing steps shown in Fig. 5 each time a proximity operation is detected, and sets the selection of an object corresponding to the detected proximity operation to valid, and sets the selection of another object within reference range T to invalid.

It is to be noted that if it is determined as "NO" in the processing of step S2, namely if the size of the object indicated by the proximity operation is greater than or equal to the threshold, control unit 11 proceeds to the processing of step S5 without executing the processing of steps S3 and S4.

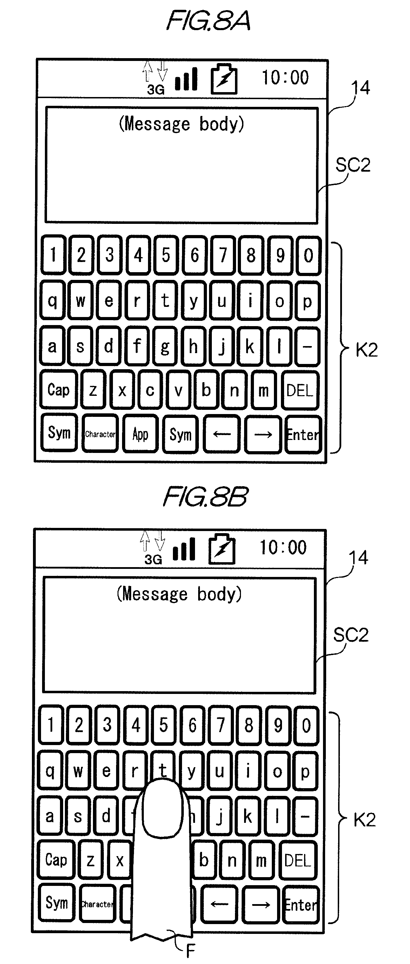

Incidentally, as shown in Fig. 8A, display device 10 may display operation region K2 in which a software keyboard representing a QWERTY keyboard, on which keys are arranged in a QWERTY layout, is displayed, instead of operation region K1 in which a software keyboard representing a numeric keypad is displayed. Generally, a QWERTY keyboard has a greater number of keys than a numeric keypad. Accordingly, display device 10 displays a greater number of objects on display surface 141 when a QWERTY keyboard is displayed than in a case where a numeric keypad is displayed. For this reason, it appears that operation error, in which a user selects an unintended object, is more likely to occur when a QWERTY keyboard is displayed rather than in a case where a numeric keypad is displayed.

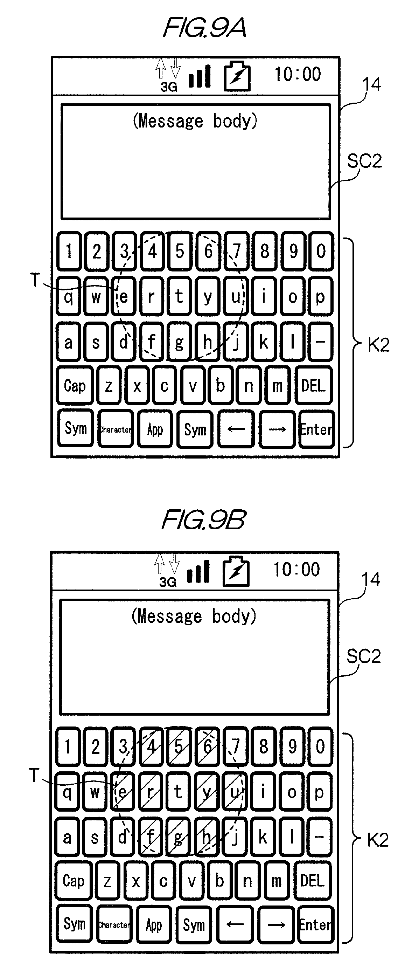

Accordingly, as shown in Fig. 8B, in a case where characters are input using a QWERTY keyboard, when a proximity operation indicating an object (in this case, an object labeled as "t") is detected, display device 10 may specify another object within reference range T (refer to Fig. 9A), and may set the selection of another object within reference range T to invalid (refer to Fig. 9B) in the same manner as described above.

It is to be noted that display device 10 may perform no settings for making the selection of an object invalid when a numeric keypad is displayed, and may perform settings for making the selection of an object invalid when a QWERTY keypad is displayed.

In a case where a screen, other than the email composing screen, (which is a screen used for inputting a telephone number, or a screen used for inputting other characters, etc.) is displayed, display device 10 may vary a setting method of validity or invalidity on selection of objects on the basis of information such as a size or a number of objects on the screen when the screen is displayed.

In the first embodiment described above, when a proximity operation indicating an object is detected, display device 10 specifies another object that surrounds the object and which is located within reference range T. Display device 10 sets the selection of the object indicated by the proximity operation to valid, and sets the selection of another object within reference range T to invalid. This prevents the surrounding object from being selected erroneously even if the user makes contact with a plurality of objects as in when the finger of a user extends across the display area containing a plurality of objects. In addition, since display device 10 suppresses operation error by setting validity or invalidity on the selection of objects, it is possible to suppress operation error in selection of the objects without changing the display of the objects (for example, enlarging the objects, or changing positions). Further, according to display device 10, since the selection of an object located far from a position of an object indicated by a proximity operation is not set to invalid, in addition to an operation error not intrinsically likely to occur, even if the user intentionally performs, for example, a contact operation to select a plurality of objects simultaneously, display device 10 can detect this contact operation.

### Second Embodiment

The second embodiment of the present invention will be described next.

Although in the above first embodiment, display device 10 specifies an object for which selection is set to invalid using a reference range, in the second embodiment display device 10 specifies an object for which selection is set to invalid without using the reference range.

Since a hardware configuration of display device 10 of this embodiment is the same as that of the above first embodiment, a description is omitted herein. In the following description, the same hardware configuration, functional configuration, and processing steps as those of the above first embodiment are represented using the same reference signs, and a description is omitted appropriately.

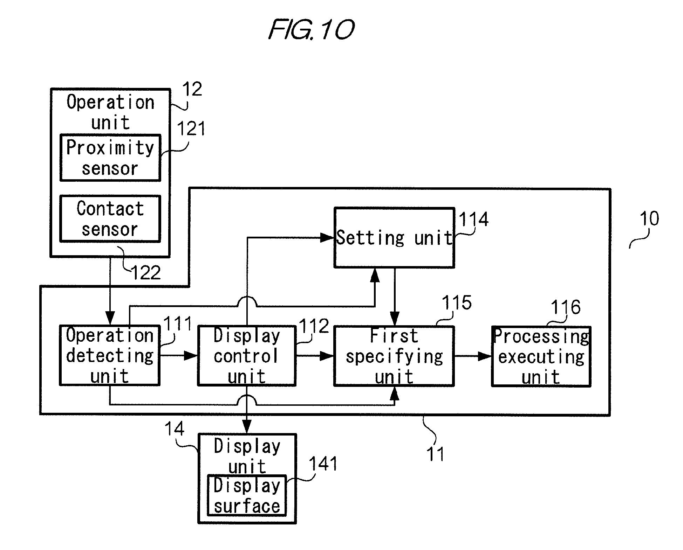

Fig. 10 is a function block diagram showing a functional configuration of control unit 11 of display device 10. As shown in Fig. 10, control unit 11 of display device 10 implements functions corresponding to operation detecting unit 111, display control unit 112, setting unit 114, first specifying unit 115, and processing executing unit 116. Operation detecting unit 111, display control unit 112, first specifying unit 115, and processing executing unit 116 of these functions implement the same functions as those of the above first embodiment, and therefore, a description is omitted herein. On the other hand, control unit 11 does not have to implement a function corresponding to second specifying unit 113.

Setting unit 114 sets to valid, the selection of an object indicated by a proximity operation that is detected by operation detecting unit 111, and sets the selection of another object displayed on display surface 141 to invalid. For example, setting unit 114 sets the selection of all other objects displayed on display surface 141 to invalid.

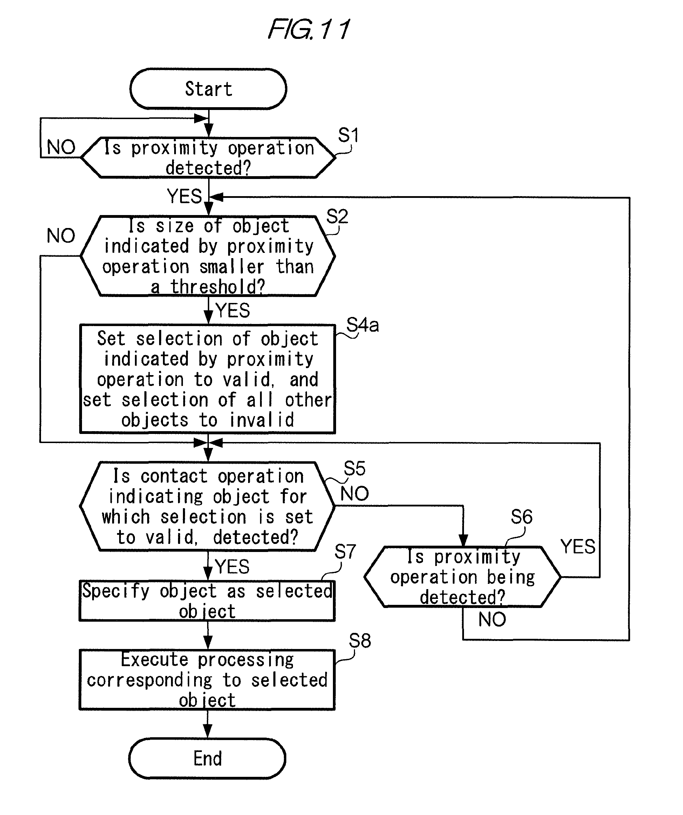

Fig. 11 is a flowchart showing a procedure for a processing performed when display device 10 provides a user interface. Regarding each of the processing steps of the present embodiment, a processing step, for which the same reference sign is used as that in the above first embodiment, is a step in which the same processing is performed as that in the first embodiment, and therefore, a description is omitted herein. Display device 10 repeatedly executes the following processing steps while an image including objects that are able to be selected by the user are displayed on display surface 141.

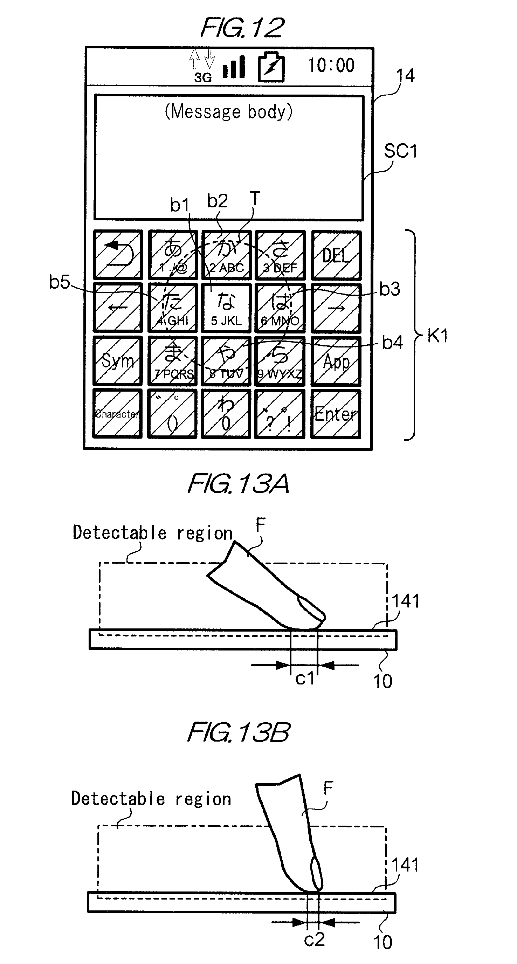

If it is determined that a proximity operation indicating an object is detected in the processing of step S1 (step S1; YES), and that a size of the object is smaller than a threshold (step S2; YES), control unit 11 of display device 10 sets the selection of the object indicated by the proximity operation to valid, and sets the selection of all other objects displayed on display surface 141 to invalid (step S4a). Taking the proximity operation on email composing screen SC1 shown in Fig. 3B as an example, as shown in Fig. 12, control unit 11 sets the selection of only object b1 to valid, and sets the selection of all other objects to invalid.

Hereafter, display device 10 executes the processing steps on and after step S5 in the same procedure as that of the above first embodiment.

Although in this embodiment display device 10 sets the selection of all objects other than the object indicated by the proximity operation to invalid, display device 10 may, for example, set the selection of some objects displayed on display surface 141 to invalid so as to set to invalid, the selection of adjacent objects on the upper and lower, and the right and left sides of the object indicated by the proximity operation.

According to display device 10 of the second embodiment described above, in addition to achieving the same effect as that of the above first embodiment, it is possible to reduce an amount of processing for suppressing the occurrence of operation error because no positional relation is specified and no object, for which selection is set to invalid, is specified.

### Third Embodiment

The third embodiment of the present invention will be described next.

Display device 10 of the third embodiment includes in addition to the configuration described in the above first embodiment, a configuration for varying a reference range according to a method of a contact operation performed by a user.

Since a hardware configuration of display device 10 of this embodiment is the same as that of the above first embodiment, a description is omitted herein. In the following description, the same hardware configuration, functional configuration, and processing steps as those of the first embodiment are represented using the same reference signs, and a description is omitted appropriately.

Figs. 13A and 13B are diagrams showing contact operations performed by a user for selecting an object as viewed from a side of display device 10.

For example, as shown in Fig. 13A, a user may perform a contact operation by placing finger F at a certain angle from display surface 141 such that finger F and display surface 141 form a relatively low angle. In this contact operation, a contact region between finger F and display surface 141 has a relatively larger size (hereinafter, referred to as a "contact size," and in this case the size is a contact area). The contact size in this case is cl. On the other hand, as shown in Fig. 13B, the user may perform a contact operation by placing finger F at an angle from display surface 141 such that finger F and display surface 141 form a relatively high angle. In this contact operation, a contact region between finger F and display surface 141 has a size that is relatively smaller than that in a case shown in Fig. 13A. The contact size in this case is c2 (< c1).

As is obvious from the comparison between the contact operations shown in Figs, 13A and 13B, it appears that when the user performs a contact operation by placing finger F at a low angle, an operation error of the user is likely to occur for the reason that a contact size in such an operation tends to increase, and this leads to finger F making contact with an object unintended by a user. Conversely, it appears that when a contact operation with a relatively small contact size is performed as shown in Fig. 13A, operation error of the user is not likely to occur. Since a contact operation depends on how a user holds display device 10 or a customary manner in which a user performs the operation, it is possible to expect that an identical user would always perform a contact operation in the same way.

Hence, display device 10 regularly stores a contact size between finger F and display surface 141, and sets an appropriate reference range based on a method of a contact operation by decreasing the reference range as the stored contact size decreases (or increasing the reference range as the stored contact size increases).

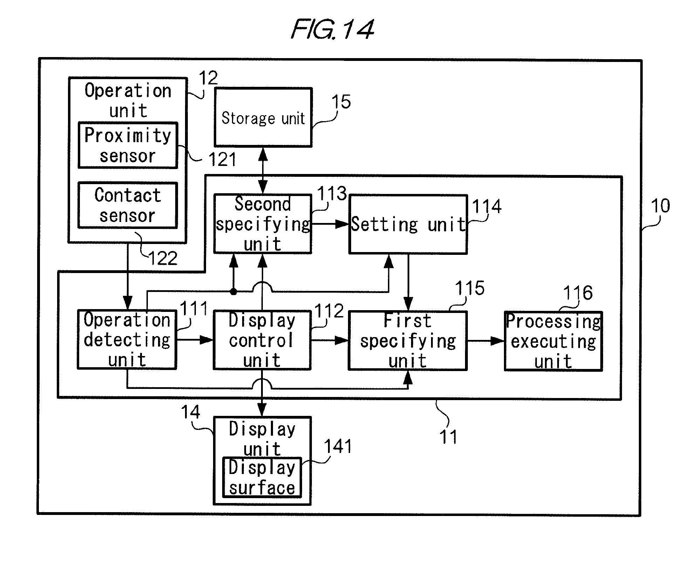

Fig. 14 is a function block diagram showing a functional configuration of control unit 11 of display device 10. As shown in Fig. 14, control unit 11 of display device 10 implements functions corresponding to operation detecting unit 111, display control unit 112, second specifying unit 113, setting unit 114, first specifying unit 115, and processing executing unit 116. Operation detecting unit 111, display control unit 112, setting unit 114, first specifying unit 115, and processing executing unit 116 of these functions implement the same functions as those of the above first embodiment, and therefore, a description is omitted herein.

When a contact operation is detected by operation detecting unit 111, second specifying unit 113 stores, in storage unit 15, a contact size between finger F and display surface 141, on the contact operation. In this case, second specifying unit 113 may specify and store a contact size based only on a contact operation indicating an object, or may store the contact size based on a contact operation that includes a contact operation not indicating an object.

Second specifying unit 113 also sets a reference range based on the contact size stored by second specifying unit 113 when specifying a positional relation between an object indicated by a proximity operation and another object displayed on display surface 141. Second specifying unit 113 implements the same function as that of the above first embodiment, except for varying the reference range.

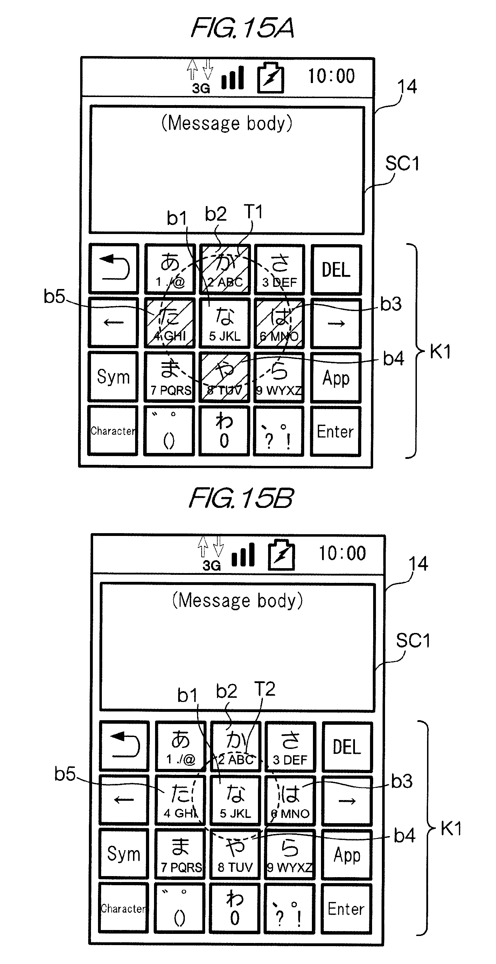

Display device 10 of this embodiment basically executes the same operation as that of the above first embodiment, according to the process shown in Fig. 5. However, in the processing of step S3, display device 10 sets a reference range according to the contact size stored in storage unit 15, and specifies a positional relation between an object indicated by a proximity operation and another object. Taking email composing screen SC1 shown in Fig. 3A as an example, if a contact operation with a large contact size is usually performed as shown in Fig. 13A, display device 10 uses reference range T1 having a large radius as shown in Fig. 15A, and determines whether any other object is disposed within reference range T1. In this case, since objects b2 to b5 are disposed within the reference range, display device 10 sets the selection of object b1 indicated by the proximity operation to valid, and sets the selection of objects b2 to b5 to invalid, similarly to the above first embodiment. Display device 10 may use a reference range that increases as the contact size increases based on a statistical result of the contact size such as an average value, a median, or a maximum value of the contact size stored in storage unit 15.

On the other hand, if the contact operation with a small contact size is usually performed as shown in Fig. 13B, display device 10 uses reference range T2 (< T1) having a radius smaller than that in the case shown Fig. 15A as shown in Fig. 15B, and determines whether any other object is disposed within reference range T2. In this case, since no other object is disposed within reference range T2, display device 10 does not set the selection of any object other than the object indicated by the proximity operation to invalid. In this case, it appears that the user performs a contact operation with a small contact size. Therefore, it is expected that operation error of a user is not likely to occur even if the size of objects is smaller than or equal to the threshold, or even if other objects are densely disposed surrounding the object as shown in Fig. 15B. This allows display device 10 to detect, even if the user intentionally performs a contact operation to select a plurality of objects simultaneously, the contact operation.

It is to be noted that display device 10 may divide the contact size into more levels, and may set different reference ranges depending on the contact size by storing a correspondence between the contact size and the reference ranges.

If display device 10 is capable of detecting a degree of the inclination of the finger with respect to display surface 141 during the contact operation, display device 10 may store the degree of the inclination of the finger, instead of storing the contact size in storage unit 15, and may reflect the degree to the reference range.

### Modification

The present invention may be carried out in different modes from those of the above embodiments. For example, the present invention may be carried out in modes described below. The following modifications may be combined appropriately.

### (Modification 1)

In each of the above embodiments, display device 10 may vary a display appearance of an object for which selection is set to valid or an object for which selection is set to invalid. Display device 10 changes a predetermined display appearance such as a color, a brightness, or a size of the object for which selection is set to valid to allow the user to visually recognize the valid object. Alternatively, display device 10 may change a predetermined display appearance such as a color, a brightness, or a size of an object for which selection is set to invalid to allow the user to visually recognize the valid object. Alternatively, display device 10 may vary a display appearance of both of the objects for which selection is set to valid and for which selection is set to invalid.

### (Modification 2)

In each of the above embodiments, although display device 10 specifies the size of the object using the size of an area, display device 10 may specify the size of the object in another method. For example, if the object is square shaped or rectangle shaped, display device 10 may specify the size of the object using a length in a predetermined direction such as a length of a side (for example, the maximum length), or a length of a diagonal. If the object is circular shaped, display device 10 may specify the size of the object using a length in a radial direction (for example, the maximum length). Even if the object is formed of other shapes, display device 10 may specify the size using a length in an arbitrary direction, instead of the area. Alternatively, display device 10 may specify the size of the object using the area and the length.

### (Modification 3)

In each of the above embodiments, although display device 10 executes the settings for making the selection of another object invalid only in a case where the size of the object is smaller than a threshold, display device 10 does not have to execute the processing of step S2, namely the determination as to whether the size of the object is greater than or equal to the threshold. In this case, display device 10 also specifies a positional relation with another object using the reference range with regard to an object having a large size.

Even if a configuration failing to specify a size of an object is employed in this way, display device 10 includes a configuration for determining that there are other objects near an object indicated by a proximity operation using a reference range, and for setting validity or invalidity on the selections. Therefore, in this display device 10 it is also possible to suppress the occurrence of operation error of a user caused by a user erroneously making contact with surrounding objects.

### (Modification 4)

In each of the above first and third embodiments, display device 10 may include a condition in which a number of another object included in the reference range is greater than or equal to a threshold (for example, greater than or equal to 3), in a specific condition. Since operation error is likely to occur as a number of a proximity object increases, if a number of another object is small and operation error is not likely to occur, display device 10 does not have to set validity or invalidity on the selection of objects. In this manner, display device 10 sets validity or invalidity on the selection of objects based on a density of other objects surrounding an object indicated by a proximity operation.

### (Modification 5)

In each of the above embodiments, display device 10 sets the selection of an object indicated by a proximity operation to valid, and specifies an object indicated by a contact operation as a selected object. However, display device 10 may specify, as a selected object, an object indicated by a non-contact operation (the second operation) in which a pointer such as a finger is brought much closer to the object than in a proximity operation that is performed for setting the selection of the object to valid, instead of by the contact operation. In this case, display device 10 may specify, for example, the selected object according to an operation that is performed in the first distance from display surface 141 in the normal direction within the detectable region of proximity sensor 121. In this case, the display device of the present invention does not have to include the contact sensor for detecting a state in which the pointer makes contact with display surface 141.

The image (screen) that includes objects and is displayed on display surface 141 of display unit 14 may be any kind of a screen.

### (Modification 6)

In each of the above embodiments, although display device 10 includes a sensor for detecting the contact operation and a sensor for detecting the proximity operation separately, display device 10 may be configured such that a single sensor detects both the contact operation and the proximity operation.

A user interface device of the present invention needs only to perform a processing from a step of displaying objects to a step of specifying the selected object. The user interface device may be a device separated from a processing device for performing the processing according to the selected object.

### (Modification 7)

In each of the above embodiments, each of the functions implemented by control unit 11 of display device 10 may be implemented by a combination of a plurality of programs, or may be implemented by a cooperation of a plurality of hardware resources.

A user interface device of the present invention may be understood as a program executed by a computer or control unit 11, or a user interface method.

### Reference Signs List

- 10: Display device
- 11: Control unit
- 111: Operation detecting unit
- 112: Display control unit
- 113: Second specifying unit
- 114: Setting unit
- 115: First specifying unit
- 116: Processing executing unit
- 12: Operation unit
- 121: Proximity sensor
- 122: Contact sensor
- 13: Communication unit
- 14: Display unit
- 141: Display surface
- 15: Storage unit

## Claims

1. A user interface device comprising:
a display unit that displays an image on a display surface;
an operation detecting unit that detects a first operation in which a pointer is brought close to the display surface without making contact with the display surface, and a second operation in which the pointer is brought closer to the display surface than in the first operation;
a display control unit that performs a control to display an image including a plurality of selectable objects on the display surface;
a setting unit that sets a selection of an object indicated by the first operation to valid, the first operation being detected by the operation detecting unit, and sets a selection of another object displayed on the display surface to invalid; and
a first specifying unit that specifies the object as a selected object by a user upon the second operation being detected by the operation detecting unit, the second operation indicating, from among the plurality of objects displayed on the display surface, the object for which selection is set to valid by the setting unit.

2. The user interface device according to Claim 1, further comprising a second specifying unit that specifies a positional relation between the object indicated by the first operation and the other object,
and wherein the setting unit sets the selection of the other object having a positional relation to invalid, the positional relation being specified by the second specifying unit and satisfying a specific condition.

3. The user interface device according to Claim 2, wherein the display control unit uses, as the specific condition, a condition in which the other object is disposed within a predetermined range from a position of the object indicated by the first operation.

4. The user interface device according to any one of Claims 1 to 3, wherein the setting unit sets, when a plurality of objects are indicated by the first operation, a selection of any one of the plurality of objects to valid, and sets a selection of another object to invalid.

5. The user interface device according to Claim 4, wherein the setting unit sets a selection of an object to valid, the object having a greatest area overlapping with the pointer among the plurality of objects indicated by the first operation.

6. The user interface device according to any one of Claims 1 to 5, wherein the setting unit sets a selection of the other object to invalid when a size of the object indicated by the first operation is smaller than a threshold.

7. The user interface device according to any one of Claims 1 to 6, wherein the display control unit varies a display appearance of the object for which selection is set to valid, or of the other object for which selection is set to invalid, according to a setting of the setting unit.

8. A user interface method comprising:
an operation detecting step of detecting a first operation in which a pointer is brought close to a display surface, on which an image is displayed, without making contact with the display surface, and a second operation in which the pointer is brought closer to the display surface than in the first operation;
a display control step of performing a control to display an image including a plurality of selectable objects on the display surface;
a setting step of setting a selection of an object indicated by the first operation to valid, the first operation being detected in the operation detecting step, and sets a selection of another object displayed on the display surface to invalid; and
a first specifying step of specifying the object as a selected object by a user upon the second operation being detected by the operation detecting unit, the second operation indicating, from among the plurality of objects displayed on the display surface, the object for which selection is set to valid in the setting step.

9. A program for causing a computer of a display device that displays an image on a display surface, to execute:
an operation detecting step of detecting a first operation in which a pointer is brought close to a display surface, on which an image is displayed, without making contact with the display surface, and a second operation in which the pointer is brought closer to the display surface than in the first operation;
a display control step of performing a control to display an image including a plurality of selectable objects on the display surface;
a setting step of setting a selection of an object indicated by the first operation to valid, the first operation being detected in the operation detecting step, and sets a selection of another object displayed on the display surface to invalid; and
a first specifying step of specifying the object as a selected object by a user upon the second operation being detected by the operation detecting unit, the second operation indicating, from among the plurality of objects displayed on the display surface, the object for which selection is set to valid in the setting step.
